# EUROPEAN PATENT SPECIFICATION

(11) **EP 2 787 231 B1**
(45) Date of publication and mention of the grant of the patent: **27.02.2019**
(21) Application number: 14162547.5
(22) Date of filing: 31.03.2014
(51) Int. Cl.: F16C 33/66, F16C 19/28, F16C 33/46, F16C 33/49

(54) **Prong type cage for double row roller bearing and double row roller bearing**
Kammartiger Käfig für zweireihiges Rollenlager und zweireihiges Rollenlager
Cage de type peigne pour roulement à rouleaux à double rangée et ledit roulement

(30) Priority: 03.04.2013 JP 2013077590
(43) Date of publication of application: 08.10.2014
(73) Proprietor: JTEKT Corporation, Osaka-shi, Osaka 542-8502 (JP)
(72) Inventor: Honjo, Hayaki, Osaka-shi, Osaka 542-8502 (JP)
(74) Representative: Winter, Brandl, Fürniss, Hübner, Röss, Kaiser, Polte - Partnerschaft mbB

(56) References cited:
- WO-A1-2012/063694
- DE-U1- 20 020 397
- JP-A- H11 117 941
- JP-A- 2001 304 271
- JP-A- 2006 077 905
- JP-A- 2008 002 495

## Description

### BACKGROUND OF THE INVENTION

### 1. Field of the Invention

The invention relates to a prong type cage incorporated in a double row roller bearing, and a double row roller bearing including a prong type cage.

### 2. Description of the Related Art

A bearing portion by which a main spindle is rotatably supported in a machine toll is required to have a high degree of stiffness for the purpose of maintaining a high degree of machining accuracy. Thus, a double row roller bearing is used. Further, in recent years, because there has been a demand for speedup of rotation of a main spindle, a double row roller bearing capable of withstanding high-speed rotation has been required.

A double row roller bearing includes an inner ring, an outer ring, and a plurality of rollers arranged in two rows between the inner ring and the outer ring. For example, Japanese Patent Application Publication No. 2012-102796 (JP 2012-102796 A) (refer to FIG. 3) describes a double row roller bearing including independent cages each of which holds a plurality of rollers arranged in a corresponding one of the two rows. That is, the double row roller bearing includes two cages. Each of the cages has an annular portion and a plurality of cage bars. The cage bars extend in the axial direction of the cage from one side face of the annular portion, and are located at intervals in the circumferential direction of the cage. The cages are formed in a comb-shape. Pockets in which the rollers are held are defined between the cage bars that are adjacent to each other in the circumferential direction.

Further embodiments of bearings are disclosed in the documents JP 2001 304271 A, JP 2008 002495 A, DE 20 020 397 U1, WO 2012/063694 A1 and JP 2006 077905 A.

Because a prong type cage has a cantilever structure in which cage bars are projected from an annular portion in the axial direction, distal end portions of the cage bars are deformable to some extent. Thus, for example, even if rolling of rollers fails to keep up with the rotation of a double row roller bearing and thus tensile force and compression force repeatedly act on the cage bars, these forces are relieved. Therefore, the cages are less prone to damages. On the other hand, in a window-type cage in which paired annular portions are connected to each other via cage bars, the cage bars are fixed to the annular portions located on the respective sides of the cage bars, and thus deformation of the cage bars is restricted. Thus, if tensile force and compression force repeatedly act on the cage bars, these forces are not easily relieved. Therefore, the window-type cage is more susceptible to damages than the prong type cage is.

In some cases, a main spindle of a machine tool is rotated at a high speed and the speed of rotation of the main spindle is abruptly changed (abruptly accelerated). In these cases, the rotational speed of a double row roller bearing that supports the main spindle and the rotational speed of cages are also abruptly changed (abruptly accelerated). Grease is provided in the double row roller bearing in order to maintain the lubrication performance of the double row roller bearing. The grease adheres to and is thus retained in the cages as well. If the rotational speed is abruptly changed, the grease retained in the cages may be splattered. For example, the grease is forced out of the cages outward in the axial direction, and, as a result, a grease shortage may occur at an early stage. A grease shortage may cause seizure or damages of the double row roller bearing, which reduces the service life (durability) of the double row roller bearing.

### SUMMARY OF THE INVENTION

One object of the invention is to provide a prong type cage for a double row roller bearing that supports a shaft rotated at a high speed, the prong type cage being configured to reduce the occurrence of a grease shortage at an early stage, and to provide a double row roller bearing including such a prong type cage.

An aspect of the invention relates to a prong type cage according to claim 1, that is incorporated in a double row roller bearing in which multiple rollers are arranged in two rows between an inner ring and an outer ring and two independent prong type cages are incorporated, and that holds the rollers arranged in one of the two rows. The prong type cage includes: an annular portion; and a plurality of cage bars extended in an axial direction of the prong type cage from one side face of the annular portion, and located at intervals in a circumferential direction of the prong type cage. Pockets in which the rollers are held are defined at positions on a side of the one side face of the annular portion and between the cage bars adjacent to each other in the circumferential direction. Recesses are formed in a face of the annular portion, the face being opposed to end faces of the rollers disposed in the pockets. The recesses are opened toward the end faces of the rollers to retain grease between the recesses and the end faces of the rollers. The recesses are opened at an inner peripheral face of the annular portion to introduce the grease that is present on the inner peripheral face of the annular portion into the recesses.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view of a double row roller bearing taken along its axial direction;
FIG. 2 is a perspective view of a cage;
FIG. 3 is an enlarged view illustrating part of the cage in FIG. 2;
FIG. 4 is a view illustrating part of the cage as viewed from the axial direction of the cage;
FIG. 5 is a sectional view of the cage taken along the line V-V in FIG. 4;
FIG. 6 is an explanatory view for explaining the sectional shape (cross-sectional shape) of a first groove;
FIG. 7A is a sectional view illustrating part of the cage taken along the longitudinal direction of a second groove;
FIG. 7B is a sectional view illustrating a modified example of the second groove;
FIG. 7C is a sectional view illustrating a modified example of the cage in FIG. 7A;
FIG. 8A, FIG. 8B and FIG. 8C are explanatory views illustrating other examples of the first groove;
FIG. 9A, FIG. 9B and FIG. 9C are explanatory views illustrating other examples of the first groove;
FIG. 10 is a planar development view of another example of the cage, schematically illustrating an inner face of the cage;
FIG. 11 is a planar development view of yet another example of the cage, schematically illustrating an inner face of the cage; and
FIG. 12 is a perspective view of a cage according to another embodiment of the invention.

### DETAILED DESCRIPTION OF EMBODIMENTS

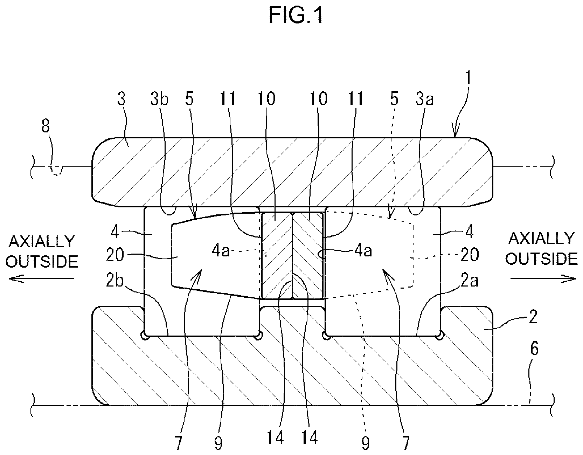

Hereinafter, embodiments of the invention will be described with reference to the accompanying drawings. FIG. 1 is a sectional view of a double row roller bearing 1 taken along its axial direction. Note that the same components in the drawings will be denoted by the same reference symbols (reference numerals), and the description of these components will not be repeated.

The double row roller bearing 1 is used as a bearing that supports a main spindle 6 of a machine tool such as a general purpose lathe, a CNC lathe, a machining center or a milling machine. The double row roller bearing 1 is capable of supporting the main spindle 6 rotated at a high speed, with a high degree of stiffness. The main spindle 6 has a diameter of, for example, approximately 50 to 150 mm, and the maximum rotational speed of the main spindle 6 is in a range from 10,000 to 15,000 rpm. The main spindle 6 may be rotated at a low speed, or at a high speed. The rotational speed of the main spindle 6, which has been rotated at a low rotational speed or which has been at a standstill, may be abruptly increased to a high rotational speed (maximum rotational speed).

The double row roller bearing 1 in the present embodiment includes an inner ring 2, an outer ring 3, a plurality of rollers 4, and annular cages 5. The rollers 4 are disposed between the inner ring 2 and the outer ring 3. The cages 5 hold the rollers 4. The rollers 4 are arranged in two rows. Each of the cages 5 holds the rollers 4 arranged in a corresponding one of the two rows. The cages 5 hold the rollers 4 independently from each other. That is, two independent cages 5 are incorporated in the double row roller bearing 1. Each of the rollers 4 has a cylindrical outer peripheral face, in other words, the double row roller bearing 1 is a double row cylindrical roller bearing.

Raceway surfaces 2a, 2b, on which the rollers 4 arranged in two rows roll, are formed on the outer peripheral face of the inner ring 2. Raceway surfaces 3a, 3b, on which the rollers 4 arranged in two rows roll, are formed in parts of the inner peripheral face of the outer ring 3. The outer ring 3 is fitted to the inner peripheral face of a bearing housing 8 of the machine tool. The main spindle 6 is passed through the inner ring 2. The double row roller bearing 1 is lubricated with grease, and the grease adheres to the inner ring 2, the outer ring 3, the rollers 4 and the cages 5.

The cage 5 for the rollers 4 arranged in one of the two rows and the cage 5 for the rollers 4 arranged in the other one of the two rows are the same except for the directions in which the cages 5 are fitted to the double row roller bearing 1. The cages 5 are arranged next to each other in the axial direction and incorporated in the double row roller bearing 1. The cages 5 are arranged such that a front side (one side face) 11 of each of the cages 5, which faces the axial direction of the cage 5, is oriented outward in the axial direction of the double row roller bearing 1, and thus annular back sides (the other side faces) 14 of the cages 5, which are opposed to each other, are allowed to contact each other. The cages 5 are rotatable independently from each other, and each of the cages 5 are rotatable together with the rollers 4 arranged in a corresponding one of the two rows.

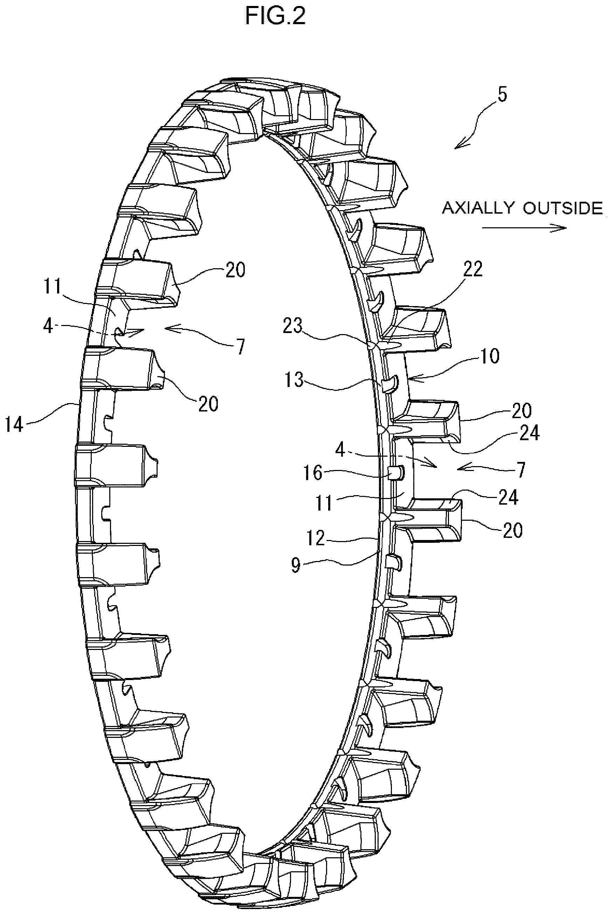

FIG. 2 is a perspective view illustrating the cage 5 (the cage 5 on the right side in FIG. 1). The cage 5 is a prong type cage, and has an annular portion 10 and a plurality of cage bars 20. The cage bars 20 are arranged at intervals (at equal intervals) in the circumferential direction. The cage bars 20 are formed so as to extend in the axial direction from the front side 11 of the annular portion 10. Thus, the cage bars 20 are formed in a cantilever-shape so as to be projected from the annular portion 10. Note that the opposite side (the other side) of the cage 5 from the front side 11 in the axial direction is the back side 14. The back side 14 of each cage 5 is an annular smooth face, and serves as a mating face that is allowed to contact the back side 14 of the other cage 5 arranged next to the aforementioned cage 5 in the axial direction.

The cage 5 is made of resin (synthetic resin), and is formed by injection-molding. The annular portion 10 and the cage bars 20 are molded integrally with each other. The cage 5 may be made of a material such as polyether ether ketone (PEEK) or polyamide.

The cage bars 20 are arranged at equal intervals in the circumferential direction. Pockets 7 in which the rollers 4 are held are defined at positions on the side of the front side 11 of the annular portion 10 and between the cage bars 20 that are adjacent to each other in the circumferential direction. That is, each of the pockets 7 is a space that is surrounded by opposed faces 24 of the cage bars 20 arranged adjacent to each other in the circumferential direction and the front side 11 of the annular portion 10. The pockets 7 are opened outward in the axial direction, and thus the cage 5 has a comb-shape as a whole.

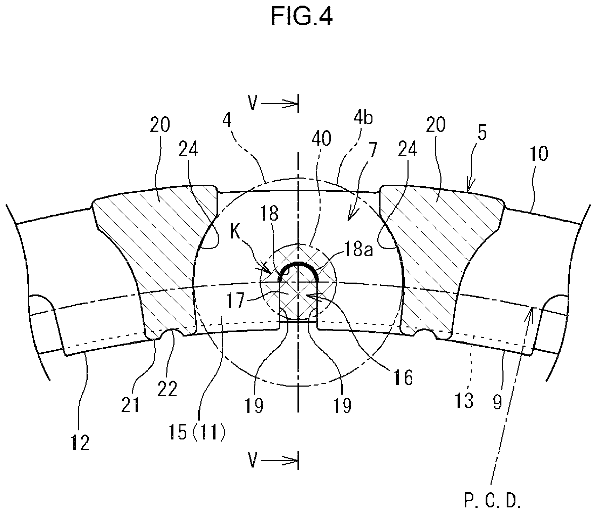

Part of each of the opposed faces 24 is a circular arc face (rounded face) that is opposed to an outer peripheral face 4b of the corresponding roller 4 across a clearance (roller clearance) (refer to FIG. 4). The cage 5 is elastically deformed radially outward by a centrifugal force as the cage 5 is rotated. However, when the rotational speed of the cage 5 is equal to or lower than a predetermined rotational speed at which the cage bars 20 are not largely deformed (a centrifugal force is relatively small), the cage 5 is positioned in the radial direction, at the circular arc faces, by the rollers 4 arranged in the corresponding row (roller guide). When the rotational speed of the cage 5 exceeds the predetermined rotational speed, the centrifugal force exerted on the cage 5 increases and thus the cage bars 20 are deformed largely. In this state, the cage 5 is positioned in the radial direction, at mainly (part of) the outer peripheral face of the annular portion 10, by the inner peripheral face of the outer ring 3 (outer ring guide).

The cage 5 is capable of retaining the grease retained in the spaces between the cage 5 and end faces 4a (refer to FIG. 1) of the rollers 4. In addition, the cage 5 has the function of supplying the retained grease into the spaces (pockets 7) between the cage 5 and the end faces 4a of the rollers 4.

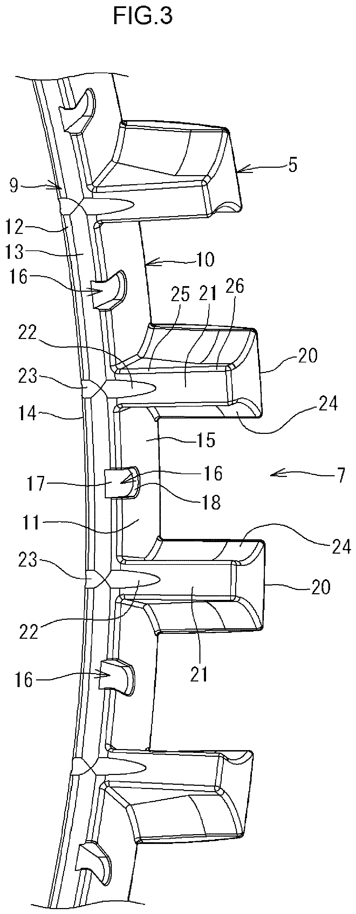

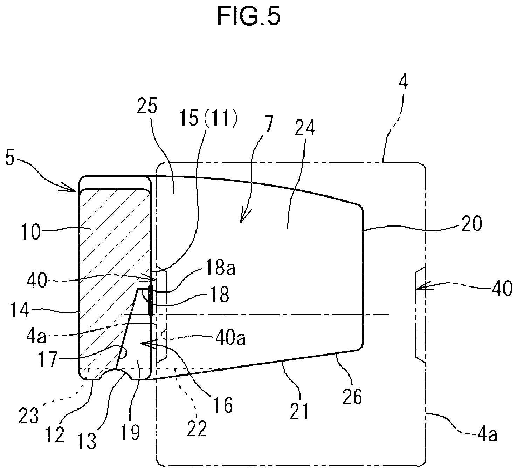

FIG. 3 is an enlarged view illustrating part of the cage 5 in FIG. 2. FIG. 4 is a view illustrating part of the cage 5 as viewed from the axial direction of the cage 5. FIG. 5 is a sectional view of the cage 5 taken along the line V-V in FIG. 4. In the annular portion 10 of the cage 5, recesses 16 are formed in a face 15 opposed to the end faces 4a (refer to FIG. 5) of the rollers 4 disposed in the pockets 7. Each recess 16 is opened toward the end face 4a of the roller 4 so as to retain the grease between the recess 16 and the end face 4a of the roller 4. The face 15 in which the recesses 16 are formed is the front side 11, which define the pockets 7. Further, each recess 16 is also opened at the inner peripheral face 12 of the annular portion 10 in order to introduce the grease that is present on the inner peripheral face 12 of the annular portion 10 into the recess 16.

Each recess 16 has a bottom face 17 opposed to the end face 4a of the corresponding roller 4, an outer wall face 18 that extends from a radially outer side portion of the bottom face 17 toward the end face 4a of the roller 4, and a pair of side wall faces 19 that extend from circumferentially opposite side portions of the bottom face 17 toward the end face 4a. The grease is stored in a space surrounded by the bottom face 17, the outer wall face 18 and the side wall faces 19 so as to be retained between the recess 16 and the end face 4a of the roller 4. In a complete assembly state in which the cages 5 are incorporated in the double row roller bearing 1, the front side 11 (the face 15) is opposed to the end face 4a of each roller 4 across a clearance (refer to FIG. 5).

The bottom face 17 of the recess 16 is a face that approaches the end face 4a of the roller 4 in a direction from the radially inside toward the radially outside, as illustrated in FIG. 5. In the present embodiment, the bottom face 17 is an inclined face that approaches the end face 4a in a direction from the inner peripheral face 12 (a first groove 13 (described later) formed in the inner peripheral face 12) of the annular portion 10 toward the radially outside.

The outer wall face 18 formed at a radially outer side portion of the recess 16 meets the front side 11 of the annular portion 10. In the present embodiment, the outer wall face 18 is orthogonal to the front side 11. As illustrated in FIG. 4, the outer wall face 18 is formed as a circular arc face (semicircular arc face). The circular arc face has a center that is coincident with the central axis of the roller 4. In FIG. 4 and FIG. 5, the circular arc contour (contour on the opening side) of the outer wall face 18 is indicated by a bold line. That is, the portion indicated by the bold line is the outer wall face 18.

As illustrated in FIG. 5, a dent 40 is formed at the center of the end face 4a of each roller 4, for the convenience of production of the roller 4. It is preferable to avoid, as much as possible, the situation where an opening edge of the recess 16 is brought into sliding contact with the end face 4a of the roller 4. Thus, in the cage 5 in the present embodiment, an opening edge 18a (a bold line portion in FIG. 4 and FIG. 5) of the outer wall face 18 of the recess 16 is located within a region of the front side 11 (face 15), which faces the dent 40. In FIG. 4, a reference character K denotes the region, that is, the crosshatched region K.

With the configuration described above, the opening edge 18a of the outer wall face 18 of the recess 16 is opposed to a bottom face 40a of the dent 40 (refer to FIG. 5), and thus it is possible to prevent the opening edge 18a from coming into sliding contact with the end face 4a of the roller 4. Thus, it is possible to reduce the range in which the opening edge 18a of the recess 16 is brought into contact with the end face 4a of the roller 4.

Further, as illustrated in FIG. 3, in order to allow the cage 5 to effectively exhibit the above-described function (the function of retaining the grease and supplying the grease into the spaces between the cage 5 and the end faces 4a of the rollers 4), a groove (first groove) 13 is formed in the inner peripheral face 12 of the annular portion 10 so as to extend in the circumferential direction (i.e., the longitudinal direction of the first groove 13 coincides with the circumferential direction). Further, the first groove 13 is communicated with the recesses 16. That is, part of each of the recesses 16 is opened into the first groove 13. In the present embodiment, the first groove 13 is a groove that extends continuously in the circumferential direction. In the present embodiment, as illustrated in FIG. 3, in addition to the first groove 13, second grooves 22 and third grooves 23 are formed in a cage inner face 9 of the cage 5.

As described above, the grooves (13, 22, 23) in which the grease is retained are formed in parts of the cage inner face 9 that includes the inner peripheral face 12 of the annular portion 10 and radially inner faces 21 of the cage bars 20. Thus, the cage 5 is able to retain the grease in a manner such that a large amount of grease does not splatter even if the main spindle 6 is abruptly accelerated. Further, the cage 5 has the function of gradually supplying the retained grease into the spaces (pockets 7) between the cage 5 and the rollers 4 and into a space defined between the cage 5 and the other cage 5 arranged next to the former cage 5 (between the back sides 14) as the cage 5 rotates.

The first groove 13 is a groove that is formed in the inner peripheral face 12 of the annular portion 10 and that extends in the circumferential direction (the longitudinal direction of the first groove 13 coincides with the circumferential direction). In the present embodiment, the first groove 13 is a groove that continuously extends in the circumferential direction. The first groove 13 is opened radially inward. The grease can be retained and held in the first groove 13. That is, even if a centrifugal force is exerted to the grease in the first groove 13 under the rotation of the cage 5, the grease is retained in the first groove 13.

As illustrated in FIG. 3, the second grooves 22 are formed in the radially inner faces 21 of the cage bars 20. Each of the second grooves 22 is a groove that extends in the direction in which a corresponding one of the cage bars 20 extends (the direction parallel to the central axis of the cage 5) (the longitudinal direction of each second groove 22 coincides with the direction in which a corresponding one of the cage bars 20 extends). The second grooves 22 are formed in the respective cage bars 20, and are communicated with the first groove 13. Each of the second grooves 22 is not extended up to a distal end portion 26 of the corresponding cage bar 20, but is extended up to a base portion 25 of the corresponding cage bar 20. The second grooves 22 introduce the grease retained in the first groove 13 to the radially inner faces 21 of the cage bars 20.

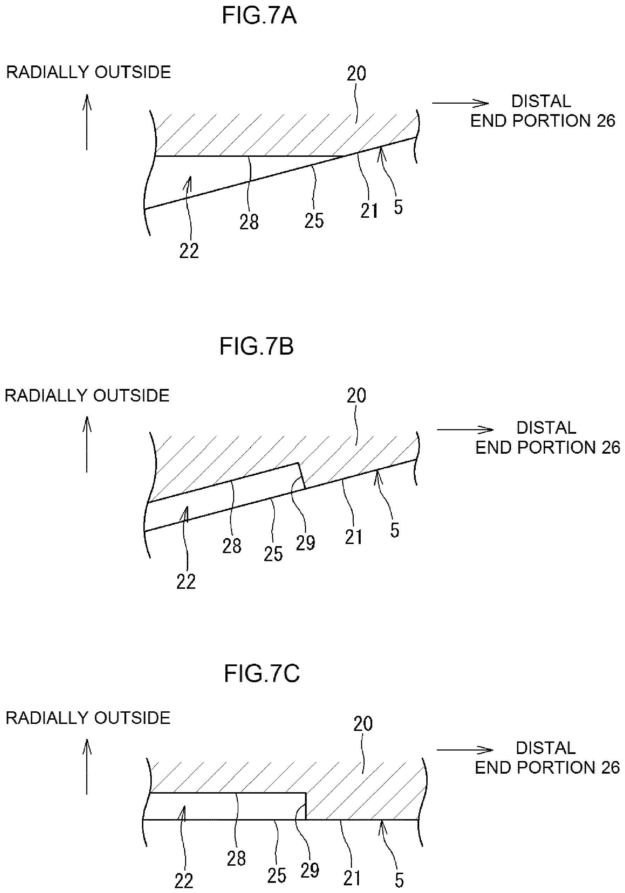

FIG. 7A is a sectional view illustrating part of the cage 5 taken along the longitudinal direction of the second groove 22. In the present embodiment, each radially inner face 21 of the cage bar 20 is an inclined face that is inclined radially outward in a direction toward the distal end portion 26 of the cage bar 20 (the distance between a straight line parallel to the axial direction of the cage 5 and the radially inner face 21 increases in a direction toward the distal end portion 26 of the cage bar 20). On the other hand, the second groove 22 (a groove bottom portion 28 of the second groove 22) is formed along a straight line that is parallel to the central axis of the cage 5. Thus, as illustrated in FIG. 7A, the depth of the second groove 22 becomes gradually shallower in the direction toward the distal end portion 26 of the cage bar 20, and finally the groove bottom portion 28 meets the radially inner face 21. The second groove 22 is formed as a groove that is extended up to the base portion 25 of the cage bar 20, and disappears at the base portion 25.

FIG. 7B is a sectional view illustrating a modified example of the second groove 22. A groove bottom portion 28 of a second groove 22 is parallel to the radially inner face 21 that is an inclined face. The second groove 22 has a wall face 29 that meets (is orthogonal to) the radially inner face 21, at its distal groove end. With the formation of the wall face 29, a stepped portion is formed by the groove bottom portion 28 and the radially inner face 21. The second groove 22 has an enhanced function of retaining the grease. That is, even if the grease retained in the second groove 22 attempts to flow toward the distal end portion 26 of the cage bar 20, the flow of the grease is blocked by the wall face 29.

FIG. 7C is a sectional view illustrating a modified example of the cage 5 in FIG. 7A. A radially inner face 21 of a cage bar 20 of a cage 5 is a face that is parallel to the central axis of the cage 5, that is, the radially inner face 21 is not an inclined face. A second groove 22 illustrated in FIG. 7C, as well as the second groove 22 illustrated in FIG. 7B, has a wall face 29 that meets (is orthogonal to) the radially inner face 21, at its distal groove end. That is, the second groove 22 illustrated in FIG. 7C has an enhanced function of retaining the grease.

As illustrated in FIG. 3, with the formation of the second grooves 22 and the first groove 13, the grease is retained in the first groove 13 formed in the inner peripheral face 12 of the annular portion 10. Further, the grease is introduced onto the radially inner faces 21 of the cage bars 20 through the second grooves 22 as the cage 5 rotates. The thus introduced grease is supplied into the spaces (pockets 7) between the cage bars 20 and the outer peripheral faces 4b of the rollers 4 disposed adjacent to the cage bars 20 in the circumferential direction, thus contributing to the lubrication of the double row roller bearing 1.

If the second grooves 22 are formed so as to be extended up to the distal end portions 26 of the cage bars 20, there is a possibility that the grease that is introduced into the second grooves 22 and then flows in the axial direction beyond the distal groove ends of the second grooves 22 will be splattered, in a large amount, to the axially outer region where there are no rollers 4, instead of being supplied into the regions (pockets 7) in which the rollers 4 are disposed. However, with the second grooves 22 in the present embodiment, the grease is restrained from being splattered, and thus, the grease is effectively supplied into the regions (pockets 7) where the rollers 4 are disposed.

The third grooves 23 are grooves that are formed in the inner peripheral face 12 of the annular portion 10, that are communicated with the first groove 13, and that are extended to the back side 14 (the other side face) of the annular portion 10. The third grooves 23 are extended from the first grooves 13 up to the back side 14, and are opened at the back side 14. With the formation of the third grooves 23, the grease retained in the first groove 13 is gradually supplied to the back side 14 of the annular portion 10 under the rotation of the cage 5. That is, the third grooves 23 have a function of introducing the grease to the back side 14.

The second grooves 22 and the third grooves 23 are formed at the same intervals in the circumferential direction, and are grooves formed along imaginary straight lines that are parallel with the central axis of the cage 5. Thus, each of the second grooves 22 and a corresponding one of the third grooves 23 define a continuous groove that is formed along a corresponding one of the imaginary lines.

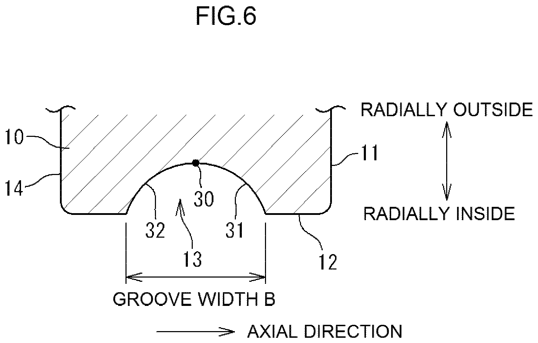

FIG. 6 is an explanatory view for explaining the sectional shape (cross-sectional shape) of the first groove 13. The cross-sectional shape of the first groove 13 illustrated in FIG. 6 is a circular arc shape with a constant radius. The first groove 13 has a groove width B (the size of the first groove 13 in the axial direction of the cage 5) that is greatest at its opening end, which is a radially innermost portion, and that is gradually decreased along a direction from the opening end toward the radially outside. That is, the sectional shape of the first groove 13 has the groove width B that becomes smaller along a direction toward a groove bottom portion 30 of the first groove 13. The groove bottom portion 30 is located at a radially outermost position in the first groove 13. In an example illustrated in FIG. 6, the groove bottom portion 30 extends continuously in the circumferential direction. The first groove 13 has a sectional shape that is uniform along the groove longitudinal direction (circumferential direction).

The first groove 13 has groove side faces 31, 32 that extend from the groove bottom portion 30 such that the distance between the groove side faces 31, 32 increases along a direction toward the radially inside. The groove side faces 31, 32 are extended from the groove bottom portion 30, and located on the opposite sides of the first groove 13 in the groove width direction. In the cross-sectional shape of the first groove 13, faces that are located radially inward of the groove bottom portion 30 are formed in the inner peripheral face 12 of the annular portion 10, at positions on the opposite sides of the first groove 13 in the groove width direction. Thus, even if the rotation of the cage 5 is abruptly accelerated, the grease retained in the first groove 13 surrounded by the groove bottom portion 30 and the groove side faces 31, 32 on the opposite sides of the groove bottom portion 30 is restrained from being splattered from the first groove 13, by the groove side faces 31, 32. Thus, it is possible to reduce the occurrence of a shortage of the grease at an early stage. Moreover, the grease retained in the first groove 13 is allowed to gradually come out onto the faces within the inner peripheral face 12, which are on the opposite sides of the first groove 13, along the groove side faces 31, 32 as the cage 5 is rotated, and the grease that has come onto these faces is supplied toward the front side 11 (the one side face) and the back side 14 (the other side face) of the annular portion 10.

The sectional shape of each second groove 22 (refer to FIG. 3) is the same as that of the first groove 13 at a portion where the second groove 22 meets the first groove 13, but the groove depth and the groove width of the second groove 22 are decreased toward its distal groove end. The sectional shape of each third groove 23 is the same as that of the first groove 13 and is uniform along the groove longitudinal direction (axial direction).

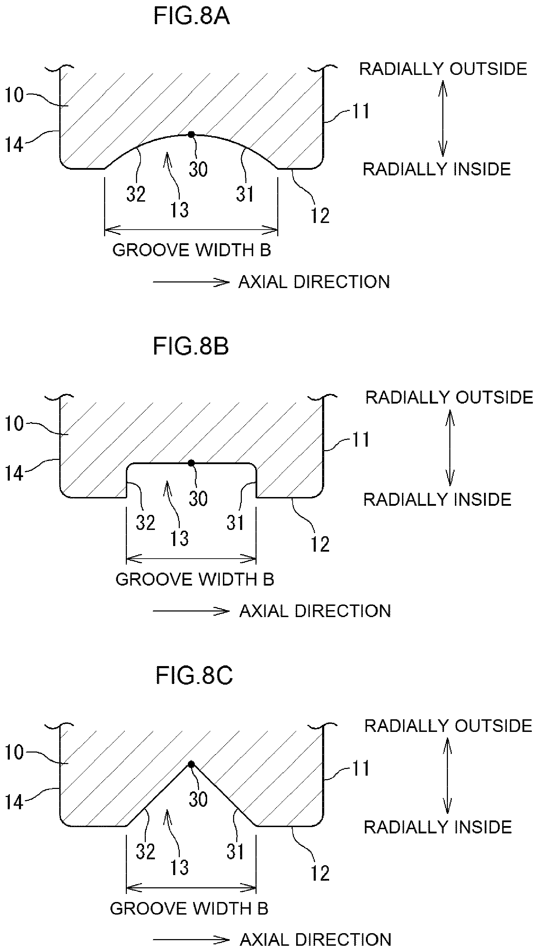

FIG. 8A, FIG. 8B and FIG. 8C are explanatory views illustrating other examples of the first groove 13. The sectional shape of a first groove 13 illustrated in FIG. 8A has a groove depth that is less than that illustrated in FIG. 6. With the first groove 13 illustrated in FIG. 8A, the grease retaining performance is lower, but the grease is more easily supplied onto the front side 11 and the back side 14, as compared with the first groove 13 illustrated in FIG. 6.

A first groove 13 illustrated in FIG. 8B has a linear groove bottom portion 30 in a groove section (cross-section). That is, a groove bottom portion 30 of the first groove 13 has a cylindrical groove bottom face. Further, groove side faces 31, 32 are formed on the opposite sides of the groove bottom portion 30 in the groove width direction. The groove side faces 31, 32 are formed in an annular shape, and formed so as to extend radially inward from the groove bottom portion 30.

The sectional shape of a first groove 13 illustrated in FIG. 8C has a generally triangular shape of which the vertex coincides with a groove bottom portion 30. In a groove section (cross-section), the groove bottom portion 30 is a recess having a small circular arc portion that projects radially outward. Groove side faces 31, 32 are formed on the opposite sides of the groove bottom portion 30 in the groove width direction. The groove side faces 31, 32 are formed so as to extend radially inward from the groove bottom portion 30 such that the distance between the groove side faces 31, 32 increases in a direction toward the radially inside.

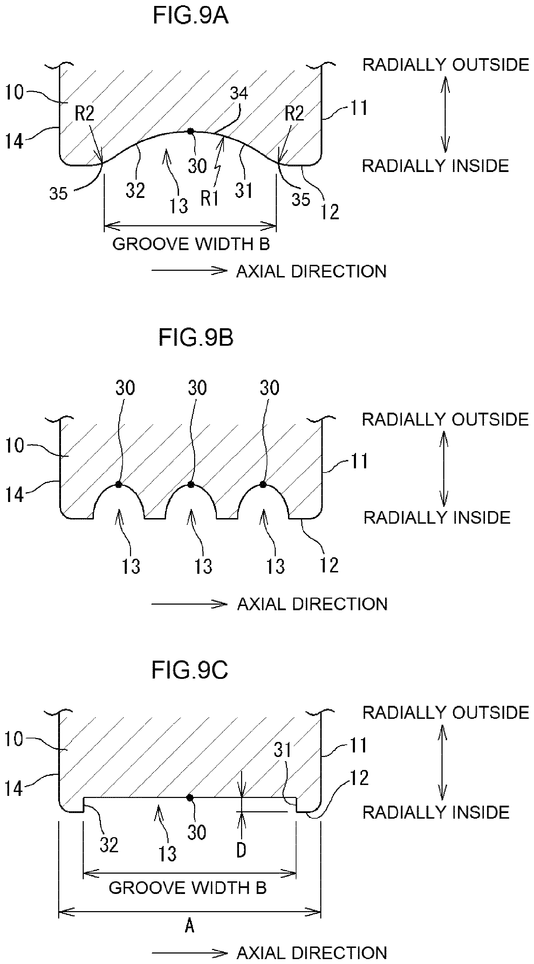

FIG. 9A, FIG. 9B and FIG. 9C are explanatory views illustrating other examples of the first groove 13. The sectional shape of a first groove 13 illustrated in FIG. 9A has a composite circular arc shape. That is, in a section of the first groove 13, the first groove 13 is formed of a first circular arc portion 34 with a radius R1, and second circular arc portions 35 formed on the opposite sides of the first circular arc portion 34 in the groove width direction and having a radius R2 that differs from the radius R1. The second circular arc portions 35 are smoothly connected to the first circular arc portion 34. The second circular arc portions 35 are smoothly connected to the inner peripheral face 12 of the annular portion 10. A groove bottom portion 30 is formed of a radially outermost portion of the first circular arc portion 34. Groove side faces 31, 32 are formed on the opposite sides of the groove bottom portion 30 in the groove width direction. The groove side faces 31, 32 are formed so as to extend radially inward from the groove bottom portion 30 such that the distance between the groove side faces 31, 32 increases toward the radially inside. Each of the groove side faces 31, 32 includes part of the first circular arc portion 34 (except the groove bottom portion 30) and a corresponding one of the second circular arc portions 35.

Multiple (three in an example illustrated in FIG. 9B) first grooves 13 are formed in the inner peripheral face 12 of the annular portion 10 illustrated in FIG. 9B. Although the sectional shape of each of the first grooves 13 is different from that of the first groove 13 illustrated in FIG. 6 (the length of each first groove 13 illustrated in FIG. 9B in the axial direction of the cage 5 is shorter than that of the first groove 13 illustrated in FIG. 6), each of the first grooves 13 has a configuration and a function similar to those of the first groove 13 illustrated in FIG. 6. In the example illustrated in FIG. 9B, the three first grooves 13 have the same sectional shape. However, the first grooves 13 may have sectional shapes that are different from each other.

A first groove 13 illustrated in FIG. 9C has a groove width B larger than that of, for example, the first groove 13 illustrated FIG. 6. The ratio (B/A) of the groove width B to a size A of the inner peripheral face 12 of the annular portion 10 in the axial direction is set to be equal to or larger than 0.7 and smaller than 0.9. Further, the first groove 13 illustrated in FIG. 9C has a groove depth D smaller than that of the first groove 13 illustrated in FIG. 6. Further, the first groove 13 illustrated in FIG. 9C, as well as the first groove 13 illustrated in FIG. 8B, has a groove bottom portion 30 having a linear shape in a groove section (cross-section). That is, the groove bottom portion 30 of the first groove 13 has a cylindrical groove bottom face.

When the second grooves 22 are formed in the cage inner face 9 of the cage 5 in addition to the first groove 13 illustrated in any one of FIG. 8A to FIG. 8C and FIG. 9A to FIG. 9C and formed in the cage inner face 9, the sectional shape of each second groove 22 is the same as that of the first groove 13 at a portion where the second groove 22 meets the first groove 13, but the groove depth and the groove width of the second groove 22 are decreased toward its distal groove end. The sectional shape of each second groove 22 may be different from that of the first groove 13. For example, the sectional shape of each second groove 22 may be the same as that of the second groove 22 illustrated in FIG. 3. When the third grooves 23 are formed in the cage inner face 9 of the cage 5 in addition to the first groove 13 illustrated in any one of FIG. 8A to FIG. 8C and FIG. 9A to FIG. 9C and formed in the cage inner face 9, the sectional shape of each third groove 23 is the same as that of the first groove 13 and is uniform along the groove longitudinal direction (axial direction). Alternatively, the sectional shape of each third groove 23 may be different from that of the first groove 13. For example, the sectional shape of each third groove 23 may be the same as that of each second groove 22 illustrated in FIG. 3.

In the sectional shape of each of the first grooves 13 illustrated in FIG. 8B and FIG. 9C, the groove width B at the groove bottom portion 30 is equal to the groove width B at the opening end on the radially inside. In the sectional shape of each of the first grooves 13 in FIG. 6, FIG. 8A, FIG. 8C, FIG. 9A, and FIG. 9B, the groove width B is increased along the direction from the groove bottom portion 30 toward the radially inside. Thus, the grease is retained in the grooves, and, in addition, the grease retained in the grooves gradually flows to the cage inner face 9 along the groove side faces 31, 32 due to a centrifugal force under the rotation of the cage 5. Further, the grease is supplied onto the back side 14 of the annular portion 10 and into the pockets 7. Thus, the grease contributes to the lubrication of the double row roller bearing 1.

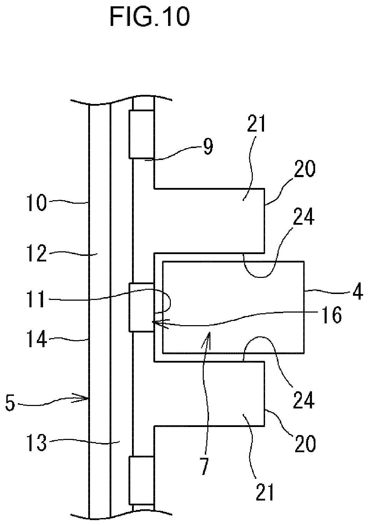

In the embodiment described above (refer to FIG. 2), the first groove 13, the second grooves 22 and the third grooves 23 are formed in the cage inner face 9. In another example of the cage 5, only the first groove 13 is formed in the cage inner face 9 as illustrated in FIG. 10. That is, the first groove 13 extending in the circumferential direction is formed in the inner peripheral face 12 of the annular portion 10. FIG. 10 is a planar development view of the annular cage 5, schematically illustrating the cage inner face 9. The first groove 13 illustrated in FIG. 10 has the same configuration as that of the first groove 13 illustrated in FIG. 2. Therefore, the detailed description of the first groove 13 will be omitted.

In the cage 5 in this example as well, the grease is retained in the first groove 13 formed in the inner peripheral face 12 of the annular portion 10. The grease retained in the first groove 13 is gradually supplied toward both the front side 11 and the back side 14 (the other side face) of the annular portion 10 under the rotation of the cage 5.

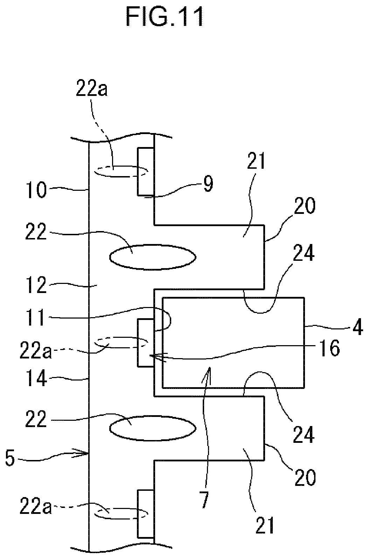

In the cage 5 in yet another example, only the second grooves 22 are formed in the cage inner face 9 as illustrated in FIG. 11. That is, the second groove 22 is formed in the radially inner face 21 of each of the cage bars 20 so as to extend in the direction in which the cage bar 20 is extended. The second grooves 22 illustrated in FIG. 11 have a configuration that is substantially the same as that of the second grooves 22 illustrated in FIG. 2. Therefore, the detailed description of the second grooves 22 will be omitted. However, one end portion of each of the second grooves 22 in the groove longitudinal direction (left end portion) is not opened at the back side 14 as illustrated in FIG. 11, and is present within the inner peripheral face 12 of the annular portion 10.

In the cage 5 in this example as well, the grease is retained in the second grooves 22 formed in the radially inner faces 21 of the cage bars 20. The grease retained in the second grooves 22 is supplied into spaces defined between the cage bars 20 and the rollers 4 that are adjacent to the cage bars 20 in the circumferential direction under the rotation of the cage 5.

Although not illustrated, only the first groove 13 and the second grooves 22 may be formed in the cage inner face 9. Further, as indicated by long dashed double-short dashed lines in FIG. 11, grooves 22a (similar to the second grooves 22), each extending in a direction along an imaginary straight line that is parallel to the central axis of the cage 5, may be formed in the inner peripheral face 12 of the annular portion 10, in addition to the second grooves 22 or instead of the second grooves 22.

In each of the cages 5 in the above-described embodiments, the recesses 16 that are opened toward the end faces 4a of the rollers 4 are formed in the face 15 (front side 11) opposed to the end faces 4a of the rollers 4 disposed in the pockets 7. Due to the recesses 16, the grease is retained in the spaces between the recesses 16 and the end faces 4a of the rollers 4. Further, because the recesses 16 are opened at the inner peripheral face 12 of the annular portion 10, the grease present on the inner peripheral face 12 is introduced into the recesses 16. In particular, in each of the embodiments, because the first groove 13 is formed in the inner peripheral face 12 of the annular portion 10, the grease is retained in the first groove 13. Further, because the recesses 16 are communicated with the first groove 13, the grease retained in the first groove 13 is introduced into the recesses 16.

By introducing the grease present on the inner peripheral face 12 of the annular portion 10 into the recesses 16, the grease is stably retained between the end faces 4a of the rollers 4 and the face 15 (front side 11) of the cage 5. As a result, it is possible to reduce the occurrence of a grease shortage at an early stage in the double row roller bearing 1. Thus, it is possible to prevent reduction in the service life of the double row roller bearing 1 due to a shortage of the grease.

Further, the bottom face 17 (refer to FIG. 5) of each of the recesses 16 is an inclined face that approaches the end face 4a of a corresponding one of the rollers 4 along the direction from the radially inside to the radially outside. Thus, the grease on the inner peripheral face of the annular portion 10 is introduced radially outward within the recess 16 along the bottom face 17 by a centrifugal force under the rotation of the cage 5. Thus, the grease is efficiently supplied to the space between the recess 16 and the end face 4a of the roller 4.

The outer wall face 18 is formed at a radially outer side portion within the recess 16. Thus, the outer wall face 18 restrains the grease retained in the recess 16 from being excessively discharged from the recess 16 by a centrifugal force under the rotation of the cage 5. Thus, it is possible to enhance the grease retaining performance of the recess 16.

Because the cage 5 in each of the embodiments is made of resin, the rotational resistance of the cage 5 is lower than that of a cage made of metal (for example, brass). Therefore, the cage 5 generates lower noise, and is capable of withstanding higher-speed rotation. Some cages are made of brass (copper alloy). In particular, when a cage made of brass is used under high-speed rotation, for example, the inner peripheral face, the outer peripheral face, the pocket walls of the cage abrade due to the contact with the inner ring, the outer ring and the rollers, and as a result, abrasion powder is generated. If the abrasion powder is mixed into the grease for lubricating a double row roller bearing, the lubrication performance of the grease is reduced, which raises a possibility that seizure or damages of the double row roller bearing will occur. However, because the cage 5 in each of the embodiments is made of resin, it is possible to prevent reduction of the lubrication performance of the grease due to the abrasion powder as described above. That is, the cage 5 made of resin is more suitable for the use under high-speed rotation than a resin made of brass.

Because the prong type cage 5 has a cantilever structure in which the cage bars 20 are projected from the annular portion 10 in the axial direction, the distal end portions of the cage bars 20 are deformable to some extent. Thus, for example, even if rolling of the rollers 4 fails to keep up with the rotation of the double row roller bearing 1 and thus tensile force and compression force repeatedly act on the cage 5, these forces are relieved. Therefore, the cage 5 is less prone to damages.

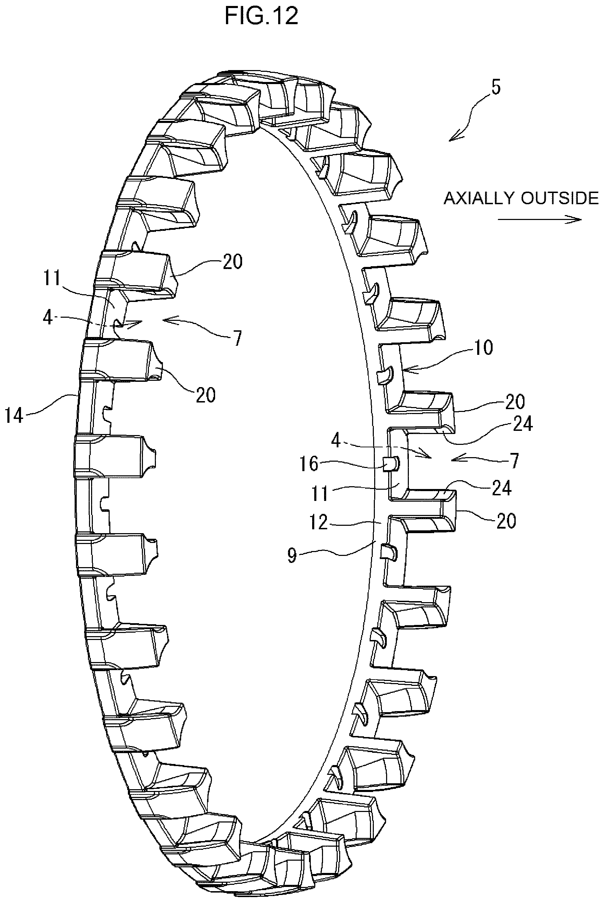

The double row roller bearing and the cage according to the invention are not limited to the embodiments illustrated the drawings. The invention may be implemented in various other embodiments within the scope of the invention. For example, the bottom face 17 of each of the recesses 16 is an inclined face in the above-described embodiments. However, the bottom face 17 may be a stepped face, or a flat face that is parallel to the front side 11. In the above-described embodiments, the cage 5 has the second grooves 22 and the third grooves 23 in addition to the first groove 13. However, the first groove 13, the second grooves 22 and the third grooves 23 may be omitted, as illustrated in FIG. 12. In this case, the recesses 16 are opened at the smooth inner peripheral face 12 of the annular portion 10, and thus the grease present on the inner peripheral face 12 is introduced into the recesses 16. The shape and the function of the recesses 16 are the same as those described in the above-described embodiments, and therefore the detailed description thereof will be omitted. When the first groove 13 is formed, the first groove 13 may be non-continuous (intermittent) grooves instead of a groove that is continuous in the circumferential direction. Further, the double row roller bearing 1 may be used for a purpose other than support of the main spindle 6 of the machine tool. In the above-described embodiments, the roller guide and the outer ring guide are switched depending on the rotational speed of the cage 5. However, other configurations may be employed. For example, a cage using either the roller guide or the outer ring guide may be employed.

With the prong type cage according to the invention and the double row roller bearing including the prong type cage, by introducing the grease that is present on the inner peripheral face of the annular portion into the recesses, the grease is stably retained between the end faces of the rollers and the cage. Thus, it is possible to reduce the occurrence of a grease shortage at an early stage in the double row roller bearing. As a result, it is possible to prevent reduction in the service life of the double row roller bearing due to a shortage of the grease.

## Claims

1. A prong type cage that is incorporatable in a double row roller bearing (1) in which multiple rollers (4) are arranged in two rows between an inner ring (2) and an outer ring (3) and two independent prong type cages are incorporated,
and that holds the rollers (4) arranged in one of the two rows, the prong type cage (5) comprising:
an annular portion (10); and
a plurality of cage bars (20) extended in an axial direction of the prong type cage (5) from one side face (11) of the annular portion (10), and located at intervals in a circumferential direction of the prong type cage (5), wherein
pockets (7) in which the rollers (4) are held are defined at positions on a side of the one side face (11) of the annular portion (10) and between the cage bars (20) adjacent to each other in the circumferential direction,
**characterised in that** recesses (16) are formed in a face (15) of the annular portion (10), the face (15) being opposable to end faces (4a) of the rollers (4) disposed in the pockets (7), wherein
the recesses (16) are opened toward the end faces (4a) of the rollers (4) configured to retain grease between the recesses (16) and the end faces (4a) of the rollers (4),
the recesses (16) are opened at an inner peripheral face (12) of the annular portion (10) configured to introduce the grease that is present on the inner peripheral face (12) of the annular portion (10) into the recesses (16)
each of the recesses (16) has a bottom face (17) opposed to the end face (4a) of a corresponding one of the rollers (4), and
an outer wall face (18) that meets the one side face (11) is formed at a radially outer side portion of each of the recesses (16).

2. The prong type cage for the double row roller bearing according to claim 1, wherein the bottom face (17) approaches the end face (4a) of the roller (4) along a direction from a radially inside toward a radially outside.

3. The prong type cage for the double row roller bearing according to claim 1 or 2, wherein a groove (13) extending in the circumferential direction and communicated with the recesses (16) are formed in the inner peripheral face (12) of the annular portion (10).

4. A double row roller bearing comprising:
an inner ring (2);
an outer ring (3);
a plurality of rollers (4) arranged in two rows between the inner ring (2) and the outer ring (3); and
a plurality of independent cages (5) according to any one of the claims 1 to 3.

5. A double row roller bearing according to claim 4, wherein a radially outer side opening edge of each of the recesses (16) is located in a region within the face opposed to the end faces (4a) of the rollers (4), the region being opposed to a dent (40) formed at a center of the end face (4a) of a corresponding one of the rollers (4).

## Patentansprüche

1. Kammartiger Käfig, der in ein zweireihiges Rollenlager (1) einbaufähig ist, in dem mehrere Rollen (4) in zwei Reihen zwischen einem Innenring (2) und einem Außenring (3) angeordnet sind und in dem zwei unabhängige kammartige Käfige eingebaut sind, und der die in einer der zwei Reihen angeordneten Rollen (4) hält, wobei der kammartige Käfig (5) aufweist:
einen ringförmigen Abschnitt (10); und
eine Vielzahl von Käfigstangen (20), die sich in einer axialen Richtung des kammartigen Käfigs (5) von einer Seitenfläche (11) des ringförmigen Abschnitts (10) erstrecken und in Abständen in einer Umfangsrichtung des kammartigen Käfigs (5) angeordnet sind, wobei
Taschen (7), in denen die Rollen (4) gehalten sind, an Positionen auf einer Seite der einen Seitenfläche (11) des ringförmigen Abschnitts (10) und zwischen den in der Umfangsrichtung zueinander benachbarten Käfigstangen (20) definiert sind, **dadurch gekennzeichnet, dass**
Aussparungen (16) in einer Fläche (15) des ringförmigen Abschnitts (10) ausgebildet sind, wobei die Fläche (15) den Endflächen (4a) der in den Taschen (7) angeordneten Rollen (4) gegenüberstellbar ist, wobei
die Aussparungen (16) hin zu den Endflächen (4a) der Rollen (4) geöffnet sind, die konfiguriert sind, um Schmierfett zwischen den Aussparungen (16) und den Endflächen (4a) der Rollen (4) zurückzuhalten,
die Aussparungen (16) an einer Innenumfangsfläche (12) des ringförmigen Abschnitts (10) geöffnet sind, die konfiguriert ist, um das Schmierfett, das an der Innenumfangsfläche (12) des ringförmigen Abschnitts (10) vorhanden ist, in die Aussparungen (16) einzuführen,
jede der Aussparungen (16) eine Bodenfläche (17) aufweist, die der Endfläche (4a) einer entsprechenden der Rollen (4) gegenüberliegt, und
eine Außenwandfläche (18), die auf die eine Seitenfläche (11) trifft, an einem radial äußeren Seitenabschnitt einer jeden Aussparung (16) ausgebildet ist.

2. Kammartiger Käfig für das zweireihige Rollenlager nach Anspruch 1, wobei sich die Bodenfläche (17) der Endfläche (4a) der Rolle (4) entlang einer Richtung von einer radialen Innenseite hin zu einer radialen Außenseite nähert.

3. Kammartiger Käfig für das zweireihige Rollenlager nach Anspruch 1 oder 2, wobei eine Nut (13), die sich in der Umfangsrichtung erstreckt und mit den Aussparungen (16) verbunden ist, in der Innenumfangsfläche (12) des ringförmigen Abschnitts (10) ausgebildet ist.

4. Zweireihiges Rollenlager mit
einem Innenring (2);
einem Außenring (3);
einer Vielzahl von Rollen (4), die in zwei Reihen zwischen dem Innenring (2) und dem Außenring (3) angeordnet sind; und
einer Vielzahl von unabhängigen Käfigen (5) nach einem der Ansprüche 1 bis 3.

5. Zweireihiges Rollenlager nach Anspruch 4, wobei eine radial äußere Seitenöffnungskante jeder der Aussparungen (16) in einem Bereich innerhalb der den Endflächen (4a) der Rollen (4) gegenüberliegenden Fläche angeordnet ist, wobei der Bereich einer Delle (40), die in einer Mitte der Endfläche (4a) einer entsprechenden der Rollen (4) ausgebildet ist, gegenüberliegt.

## Revendications

1. Cage de type peigne qui peut être incorporée dans un roulement à rouleaux à double rangée (1) dans lequel de multiples rouleaux (4) sont agencés en deux rangées entre une bague intérieure (2) et une bague extérieure (3) et deux cages de type peigne indépendantes sont incorporées et qui maintient les rouleaux (4) agencés dans une des deux rangées, la cage de type peigne (5) comprenant :
une partie annulaire (10) ; et
une pluralité de barres de cage (20) étendues dans une direction axiale de la cage de type peigne (5) depuis une face latérale (11) de la partie annulaire (10), et situées à des intervalles dans une direction circonférentielle de la cage de type peigne (5), dans laquelle
des poches (7) dans lesquelles les rouleaux (4) sont maintenus sont définies en des positions sur un côté de l'une face latérale (11) de la partie annulaire (10) et entre les barres de cage (20) adjacentes l'une à l'autre dans la direction circonférentielle,
**caractérisée en ce que**
des évidements (16) sont formés dans une face (15) de la partie annulaire (10), la face (15) étant opposable à des faces d'extrémité (4a) des rouleaux (4) disposés dans les poches (7), dans laquelle
les évidements (16) sont ouverts vers les faces d'extrémité (4a) des rouleaux (4) configurés pour retenir de la graisse entre les évidements (16) et les faces d'extrémité (4a) des rouleaux (4),
les évidements (16) sont ouverts au niveau d'une face périphérique intérieure (12) de la partie annulaire (10) configurés pour introduire la graisse qui est présente sur la face périphérique intérieure (12) de la partie annulaire (10) dans les évidements (16)
chacun des évidements (16) a une face inférieure (17) opposée à la face d'extrémité (4a) de l'un correspondant des rouleaux (4), et
une face de paroi extérieure (18) qui rencontre l'une face latérale (11) est formée au niveau d'une partie latérale radialement extérieure de chacun des évidements (16).

2. Cage de type peigne pour le roulement à rouleaux à double rangée selon la revendication 1, dans laquelle la face inférieure (17) approche la face d'extrémité (4a) du rouleau (4) le long d'une direction depuis un radialement intérieur vers un radialement extérieur.

3. Cage de type peigne pour le roulement à rouleaux à double rangée selon la revendication 1 ou 2, dans laquelle une rainure (13) s'étendant dans la direction circonférentielle et communiquant avec les évidements (16) est formées dans la face périphérique intérieure (12) de la partie annulaire (10).

4. Roulement à rouleaux à double rangée comprenant :
une bague intérieure (2) ;
une bague extérieure (3) ;
une pluralité de rouleaux (4) agencés en deux rangées entre la bague intérieure (2) et la bague extérieure (3) ; et
une pluralité de cages indépendante (5) selon l'une quelconque des revendications 1 à 3.

5. Roulement à rouleaux à double rangée selon la revendication 4, dans lequel un bord ouvrant côté radialement extérieur de chacun des évidements (16) est situé dans une région dans la face opposée aux faces d'extrémité (4a) des rouleaux (4), la région étant opposée à une entaille (40) formée en un centre de la face d'extrémité (4a) de l'un correspondant des rouleaux (4).
